# EUROPEAN PATENT SPECIFICATION

(11) **EP 4 653 156 B1**
(45) Date of publication and mention of the grant of the patent: **29.04.2026**
(21) Application number: 24177197.1
(22) Date of filing: 22.05.2024
(51) Int. Cl.: B26B 15/00, A01G 3/037

(54) **CUTTING TOOL**
SCHNEIDWERKZEUG
OUTIL DE COUPE

(43) Date of publication of application: 26.11.2025
(73) Proprietor: Husqvarna AB, 561 82 Huskvarna (SE)
(72) Inventor: SCHWARZKOPF, Michael, 89231 Neu-Ulm (DE); BROBEIL, Achim, 89134 Blaustein (DE); RUDOLF, Peter, 89250 Senden (DE)
(74) Representative: Finkele, Rolf

(56) References cited:
- EP-A2- 3 262 923
- WO-A1-2023/242018
- DE-A1- 102018 251 743

## Description

### TECHNICAL FIELD

The present disclosure relates to a cutting tool. More specifically, the present disclosure relates to a user-friendly and ergonomic cutting tool.

### BACKGROUND

Cutting tools such as secateurs, loppers, pliers are used for performing cutting action on objects such as, but not limited to, branches of various dimensions. These cutting tools generally include a first blade and a second blade such that the first blade and the second blade together perform the cutting action on the object placed therebetween. A first handle is operatively coupled to the first blade and a second handle is operatively coupled to the second blade such that a user may apply mechanical force on the first handle and the second handle to bring the first handle and the second handle and hence the first blade and the second blade closer to each other to initiate cutting action.

However, the cutting action using these cutting tools requires a considerable effort of the user and causes fatigue to the user after few cuts. Hence, an improved cutting tool is required that may provide assistance to the user such that substantially less effort on the part of the user is required to initiate the cutting action.

An example of an improved cutting tool is provided in German application 102,018,251,743 (hereinafter referred to as '743 reference). The '743 reference provides a cutting device, in particular a garden cutting device, which includes at least one first and one second cutting element which may be moved relative to one another. The cutting tool further includes a first and one second lever element which may be moved relative to one another, in particular a handle element, for opening and closing the cutting elements. Furthermore, the cutting tool includes a drive unit, which in at least one operating state is provided to at least assist a movement of the second cutting element relative to the first cutting element. Furthermore, the cutting tool includes a sensor and/or control device, which is provided to determine a force and/or a cutting force of the cutting elements. However, the '743 reference seems short of disclosing an ergonomic design of the cutting tool that may be equally efficient for different users with different hand sizes.

Thus, there is a need for the cutting tool that is easy to use, adaptable and may prevent fatigue or injuries to the hand of the user.

### SUMMARY

In view of the above, it is an objective of the present invention to solve or at least reduce the drawbacks discussed above. The objective is at least partially achieved by a cutting tool. The cutting tool includes a first blade and a second blade pivotally coupled to the first blade. The first blade and the second blade together perform a cutting action on an object placed between the first blade and the second blade. A first handle is operatively coupled to the first blade and a second handle is operatively coupled to the second blade. A drive unit is operatively coupled to at least one of the first blade and the second blade such that the drive unit is configured to selectively provide a supplemental motor force to assist a movement of at least one of the first blade and the second blade to perform the cutting action. At least one first sensor is coupled to the first handle for detecting a force acting on the first handle. Further, a control unit is electrically coupled to the drive unit and the at least one first sensor. The cutting tool is characterized in that at least one second sensor is coupled to the second handle for detecting a force acting on the second handle. Further, the control unit based on respective outputs of the at least one first sensor and the at least one second sensor controls an opening angle between the first blade and the second blade.

Thus, the present disclosure provides the pedelec type cutting tool which minimizes the effort of a user to operate the cutting tool. The cutting tool has simple mechanical construction. The cutting tool includes the control system which communicates with the drive unit and the plurality of sensors provided with each of the handles of the cutting tool to provide an effortless cutting experience to the user of the cutting tool. The control unit automatically controls the opening angle between the first blade and the second blade and hence the first handle and the second handle to prevent user from fatigue during cutting operation.

According to an embodiment of the present disclosure, the at least one first sensor and the at least one second sensor are configured to simultaneously detect mechanical forces exerted respectively on the first handle and the second handle and the material of the object touching the first handle and the second handle.

According to an embodiment of the present disclosure, the control unit includes a database. The database aids in verifying the optimal conditions for operation of the cutting tool.

According to an embodiment of the present disclosure, the control unit includes a machine learning algorithm. The machine learning algorithm assists in remembering the behavior of the user while operating the cutting tool and predict optimal conditions to provide better user experience the next time the cutting tool is utilized or operated.

According to an embodiment of the present disclosure, the control unit automatically adjusts the opening angle between the first handle and the second handle by virtue of machine learning algorithm to suit the hand size of a user. The automatic adjustment of the opening angle between the first handle and the second handle prevents user fatigue and injuries.

According to an embodiment of the present disclosure, the control unit allows automatic locking and unlocking of the cutting tool. The control unit automatically locks and unlocks the cutting tool thereby eliminating the need for the mechanical locks which if left unattended by the user may lead to inadvertent injuries to the user. The control unit allows automatic locking and unlocking when the user taps the at least one handle twice or thrice.

According to an embodiment of the present disclosure, the control unit includes a voice module to adhere to voice commands of the user. The user may provide voice commands to the control unit of the cutting tool to promote smooth, efficient, ergonomic cutting operation.

According to an embodiment of the present disclosure, the cutting tool is secateurs. The cutting tool may be any other cutting tool with two or more cutting edges to promote efficient cutting of objects such as, branches of trees.

Other features and aspects of this invention will be apparent from the following description and the accompanying drawings.

### BRIEF DESCRIPTION OF THE DRAWINGS

The invention will be described in more detail with reference to the enclosed drawings, wherein:
**FIG. 1** shows a cross-sectional view of a cutting tool, in accordance with an aspect of the present disclosure; and
**FIG. 2** shows a block diagram showing communication between a control unit, a drive unit, a first sensor and a second sensor, in accordance with an aspect of the present disclosure.

### DESCRIPTION OF EMBODIMENTS

The present invention will be described more fully hereinafter with reference to the accompanying drawings, in which example embodiments of the invention incorporating one or more aspects of the present invention are shown. This invention may, however, be embodied in many different forms and should not be construed as limited to the embodiments set forth herein; rather, these embodiments are provided so that this disclosure will be thorough and complete, and will fully convey the scope of the invention to those skilled in the art. For example, one or more aspects of the present invention may be utilized in other embodiments and even other types of structures and/or methods. In the drawings, like numbers refer to like elements.

Certain terminology is used herein for convenience only and is not to be taken as a limitation on the invention. For example, "upper", "lower", "front", "rear", "side", "longitudinal", "lateral", "transverse", "upwards", "downwards", "forward", "backward", "sideward", "first," "second," "horizontal," "vertical," "upward", "inner", "outer", "inward", "outward", "top", "bottom", "higher", "above", "below", "central", "middle", "intermediate", "between", "end", "adjacent", "proximate", "near", "distal", "remote", "radial", "circumferential", or the like, merely describe the configuration shown in the Figures. Indeed, the components may be oriented in any direction and the terminology, therefore, should be understood as encompassing such variations unless specified otherwise.

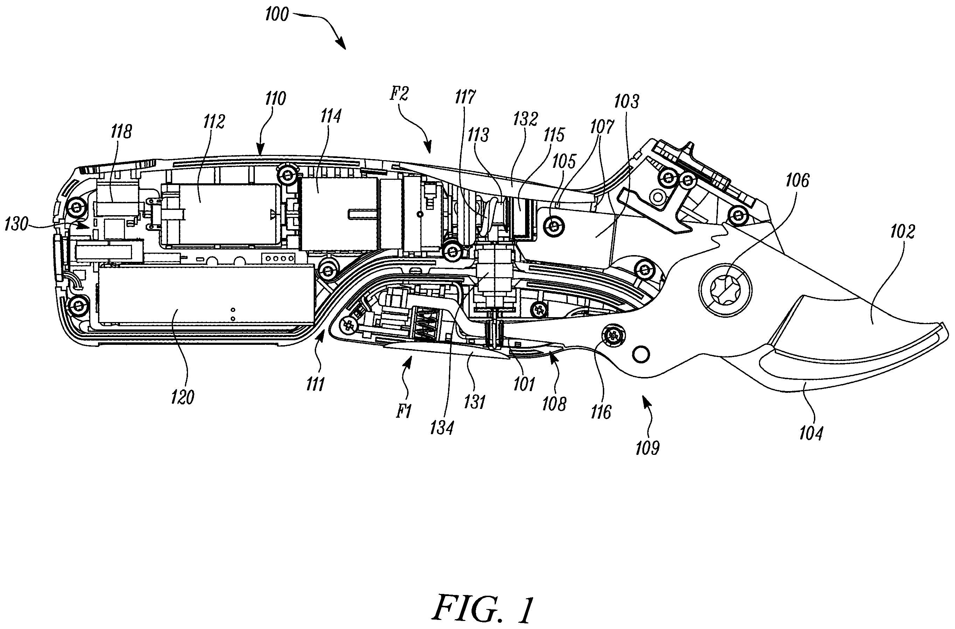

**FIG. 1** shows a cutting tool **100.** The cutting tool **100** of the present disclosure is secateurs, however, the present disclosure may be readily applied to any other cutting tool **100** such as, but not limited to, a lopper, shears, scissors etc., with two or more cutting edges.

The cutting tool **100** includes one or more blades i.e., a first blade **102** and a second blade **104.** The second blade **104** is pivotally coupled to the first blade **102** around a pivot axis, extending through a pivot point **106.** The first blade **102** and the second blade **104** together perform a cutting action on an object (generally a branch) placed between the first blade **102** and the second blade **104.**

In some embodiments, the first blade **102** and the second blade **104** may be one or more of a clip point blade, a drop point blade, a gut hook blade, a hawkbell blade, a needle point blade, a straight back blade, a sheepsfoot blade and a spear point blade.

In some embodiments, the first blade **102** and the second blade **104** may be made of aluminum or any other material as used or known in the art. Choice of the material for any of the first blade **102** and the second blade **104** will generally depend upon factors such as life, application, weight, or other parameters related to the cutting tool **100.** However, the present disclosure is not to be limited by the type of material of the first blade **102** and the second blade **104** in any manner.

During implementation, at least one of the first blade **102** and the second blade **104** may be a fixed blade while the other performs desired cutting action. Alternately or additionally, both the first blade **102** and the second blade **104** may be movable during the cutting action.

As shown in **FIG. 1****,** the cutting tool **100** includes one or more handles i.e., a first handle **108** and a second handle **110.** The first handle **108** is operatively coupled with the first blade **102.** Further, the first handle **108** defines a top portion **109** and a back portion **111.** The second handle **110** is operatively coupled with the second blade **104.** In a closed position of the cutting tool **100,** at least a part of the second handle **110** at least partially encloses the back portion **111** of the first handle **108.** Although, the present embodiment shows the first handle **108** almost fully enclosed within the second handle **110,** the second handle **110** may also be at least partially enclosed within the second handle **110.**

The first blade **102** and the second blade **104** are operably coupled to the first handle **108** and the second handle **110,** respectively, such that a user may apply mechanical force "F1" to the first handle **108** and mechanical force "F2" to the second handle **110** to close the cutting tool **100** to perform the cutting action. The first blade **102** includes a first shaft section **101** and the second blade **104** includes a second shaft section **103.** The first shaft section **101** and the second shaft section **103** are arranged inside a cavity formed by the first handle **108** and second handle **110** respectively.

The second shaft section **103** of the second blade **104** is rigidly fixed to the second handle **110.** For this purpose, the second handle **110** may comprise a thread dome **105** which extends through a recess form fitting to an outer contour of the thread dome **105** which may be circular or the like. Further, the second handle **110** may comprise fixation elements **107** formed as fixation rips for holding the second shaft section **103** in position within the second handle **110.** The first shaft section **101** of the first blade **102** is coupled pivotally movable to the first handle **108.** The first shaft section **101** and the first handle **108** may pivot around a handle pivot point **116.**

With continued reference to **FIG. 1****,** the cutting tool **100** includes a drive unit **130.** The drive unit **130** is operatively coupled to at least one of the first blade **102** and the second blade **104.** The drive unit **130** is configured to selectively provide a supplemental motor force to assist a movement of at least one of the first blade **102** and the second blade **104** to perform the cutting action.

The drive unit **130** includes a motor **112** and a gearbox **114.** Further, the drive unit **130** includes a printed circuit board assembly (PCBA) **118** and a battery **120.** The battery **120** may be Li-ion battery or any other battery known in the related art without limiting the scope of the present disclosure. In some embodiments, the cutting tool **100** may include a lid to allow for an easy replacement of the battery **120.** The lid may be slide opened to change the battery **120.** As shown in **FIG. 1****,** the drive unit **130** is housed within the second handle **110.** The battery **120** of the drive unit **130** is also housed within the second handle **110.** This helps in reducing the dimensions and improving ergonomic profile of the first handle **108.**

The drive unit **130** further includes a drive shaft to be driven by the motor **112,** a bearing **115** for supporting the drive shaft, a winding element **113** and a pulling element **117** such as a rope **117.** The winding element **113** is attached on and around the drive shaft such that the rope **117** is wound around the winding element **113** if the drive shaft is driven by the motor **112.**

An end of the rope **117** is slung around the first shaft section **101** of the first blade **102** such that the first shaft section **101** is pulled towards the second handle **110** or the second shaft section **103** of the second blade **104,** respectively, in the case that the rope **117** is retracted and wound around the winding element **113** by driving the drive shaft driven by the motor **112.** In this way, an assisting force is applied to the handles (i.e., the first handle **108** and the second handle **110)** in addition to mechanical force "F1, F2" applied by the user to the first handle **108** and the second handle **110.**

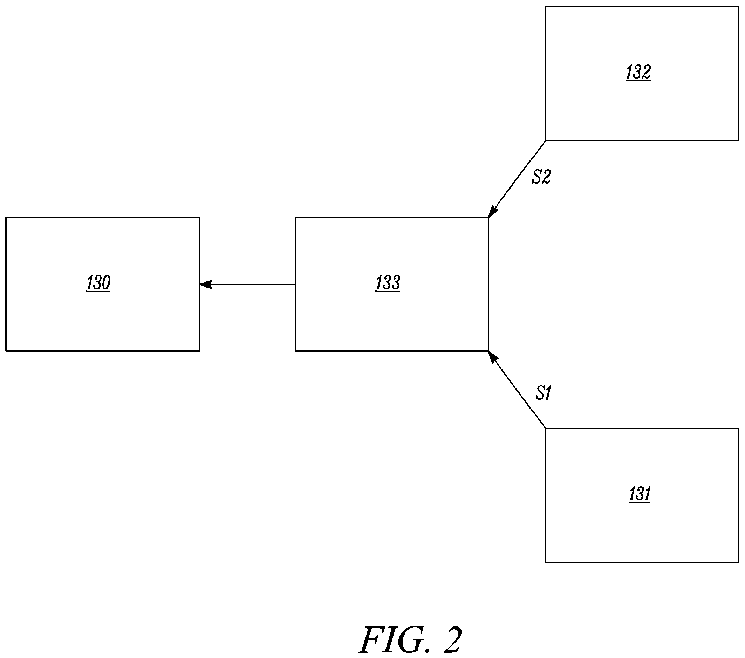

The assistance force applied on the handles (i.e., the first handle **108** and the second handle **110)** is controlled by a control unit **133** (as shown in **FIG. 2****).** The control unit **133** may be installed in one or more of the first handle **108** and the second handle **110.** The control unit **133** may be one or more microprocessors configured to manipulate the working of the drive unit **130** and the control unit **100.** The control unit **133** is electrically coupled to the drive unit **130** such that the control unit **133** controls the activation and deactivation of the drive unit **130.** The communication between the control unit **133** and the drive unit **130** is unidirectional communication (as shown in **FIG. 2****).**

Further, the cutting tool **100** as shown in **FIG. 1****,** includes at least one first sensor **131.** The at least one first sensor **131** is coupled to the first handle **108.** Furthermore, the cutting tool **100** advantageously includes at least one second sensor **132.** The at least one second sensor **132** is coupled to the second handle **110.** The at least one first sensor **131** and the at least one second sensor **132** may preferably be located at a gripping area of the first handle **108** and the second handle **110** respectively. The at least one first sensor **131** and the at least one second sensor **132** may be a single sensor or a group of sensors located at different regions of the handles **108, 110** respectively.

The control unit **133** is electrically coupled to the at least one first sensor **131** and the at least one second sensor **132.** The control unit **133** is electrically coupled to the drive unit **130,** the at least one first sensor **131** and the at least one second sensor **132** for efficient, ergonomic, and user-friendly operation of the cutting tool **100.** The control unit **133** based on respective outputs **"S1, S2"** of the at least one first sensor **131** and the at least one second sensor **132** controls the operation of the drive unit **130** and hence the cutting tool **100** in an improved manner compared to the prior art. The control unit **133 is** provided to switch on the drive unit **130** as a function of force "F1, F2" exerted on the handles **108, 110.**

In some embodiments of the present disclosure, the at least one first sensor **131** and the at least one second sensor **132** are configured to detect the forces "F1, F2". The at least one first sensor **131** is configured to detect force "F1" acting on the first handle **108.** The at least one second sensor **132** is configured for detecting force "F2" acting on the second handle **110.** The force "F1, F2" are mechanical forces applied to the handles **108, 110** by the user for initiating the cutting action. The control unit **133** receives the outputs "S1, S2" indicative of the detection of force "F1, F2" and activates the drive unit **130** to aid in cutting.

In some embodiments of the present disclosure, the at least one first sensor **131** and the at least one second sensor **132** are configured to simultaneously detect mechanical force (F1, F2) exerted respectively on the first handle **108** and the second handle **110** and the material of the object touching the first handle **108** and the second handle **110.** The at least one first sensor **131** and the at least one second sensor **132** may be a combination of two sensors designed to simultaneously detect force "F1, F2" and the nature or characteristics of the material of the object touching the handles **108, 110.** The control unit **133** based on outputs "S1, S2" from the at least one first sensor **131** and the at least one second sensor **132** respectively decides whether to activate the drive unit **130.**

The control unit **133** includes a database that aids in verifying the optimal conditions for operation of the cutting tool **100.** The control unit **133** after co-relating the database and the outputs "S1, S2" recognizes that force "F1, F2" is exerted on the first handle **108** and the second handle **110** respectively and further recognizes that the object touching the handles **108, 110** is a glove worn by the user to grip the handles **108, 110.** The control unit **133** after recognition of force "F1, F2" and the gloves, activates the drive unit **130** to aid in cutting. However, in absence of any of the above parameters such as, force, or gloves, the control unit **130** does not activate the drive unit **130.** This may promote user safety and ergonomics.

In an advantageous embodiment of the present disclosure over the prior art, the control unit **133** includes a machine learning algorithm to remember the behavior of the user while operating the cutting tool **100** and predict optimal conditions to provide better user experience the next time the cutting tool **100** is utilized or operated. The control unit **133** remembers the user characteristics such as, but not limited to, hand-size of the potential user of the cutting tool **100** based on the received outputs "S1, S2" from the at least one first sensor **131** and the at least one second sensor **132.** The control unit **133** automatically adjusts or controls an opening angle between the first blade **102** and the second blade **104.** The control unit **133** automatically adjusts or controls the opening angle between the first handle **108** and the second handle **110** by virtue of machine learning algorithm to suit the hand size of the user when the user uses or operates the cutting tool **100** for the second time to prevent user fatigue or injuries.

For example, the control unit **133** may recognize (or detect) that the user is applying force "F1+N, F2+N" (wherein N is an integer) to the handles **108, 110** more than what is required to initiate the cut. The control unit **133** may then understand that the user is not able to grip the handles **108, 110** properly due to small hand size such that from the next time the control unit **133** may open the handles **108, 110** according to the small hand size of the user. If, however, the user of the cutting tool **100** changes and possess large hand size, the control unit **133** may recognize that the user is applying force "F1-N, F2-N" (wherein N is integer) to the handles **108, 110** less than what is required to initiate the cut. The control unit **133** may then override the previous information and memorize the updated circumstances of the user. The control unit **133** may then automatically adjust the or control the opening angle between the first blade **102** and the second blade **104** or the opening angle between the first handle **108** and the second handle **110** to suit the large hand size of the user. Similarly, the opening angles between the blades **102, 104** or the handles **108, 110** may be automatically adjusted based upon the dimensions of the object to be cut such as the branches of different dimensions.

In this advantageous embodiment also, the control unit **133** first co-relates the database and the outputs "S1, S2" to facilitate safe cutting operation of the cutting tool **100** by the user. Further, the control unit **133** also advantageously aids in locking and unlocking of the cutting tool **100** thereby eliminating the need for mechanical locking and unlocking of the cutting tool **100.** The unlocking of the cutting tool is also aided by a spring **134.**

In some embodiments, the control unit **133** may unlock the cutting tool **100,** as soon as the control unit **133** satisfies the co-relation between the database and the outputs "S1, S2". In some embodiments, the control unit **133** may unlock the cutting tool **100,** after a delay of 2 - 5 seconds after satisfying the co-relation between the database and the outputs "S1, S2". In some embodiments, the control unit **133** may unlock the cutting tool **100** when the user taps the at least one handle **108, 110** twice or thrice.

In some embodiments, the control unit **133** may lock the cutting tool **100** as soon as the control unit **133** recognizes the absence of outputs "S1, S2". In some embodiments, the control unit **133** may lock the cutting tool **100** after the delay of 2 - 5 seconds after the control unit **133** recognizes the absence of outputs "S1, S2". In some embodiments, the control unit **133** may lock the cutting tool **100** after the cutting operation when the user taps the at least one handle **108, 110** twice or thrice.

In some embodiments, the control unit **133** may include a voice module to adhere to voice commands of the user to promote smooth, efficient, ergonomic cutting operation. The user may instruct the cutting tool **100** to lock, unlock, adjust the angle between the cutting blades **102, 110** using voice commands.

Thus, the present disclosure provides the pedelec type cutting tool **100** which minimizes the effort of a user to operate the cutting tool **100.** The cutting tool **100** has simple mechanical construction. The cutting tool **100** includes the control unit **133** which communicates with the drive unit **130** and the plurality of sensors **131, 132** provided with each of the handles **108, 110** of the cutting tool **100** to provide an effortless cutting experience to the user of the cutting tool **100.** The control unit **133** automatically controls the opening angle between the first blade **102** and the second blade **104** and hence the first handle **108** and the second handle **110** to prevent user from fatigue during cutting operation. The control unit **133** automatically adjusts the opening angle between the first handle **108** and the second handle **110** based on the hand size of the user. The control unit **133** further automatically locks and unlocks the cutting tool **100** thereby eliminating the need for the mechanical locks which if left unattended by the user may lead to inadvertent injuries to the user.

In the drawings and specification, there have been disclosed preferred embodiments and examples of the invention and, although specific terms are employed, they are used in a generic and descriptive sense only and not for the purpose of limitation of the scope of the invention being set forth in the following claims.

### LIST OF ELEMENTS

- **100**: Cutting Tool
- **101**: First Shaft Section
- **102**: First Blade
- **103**: Second Shaft Section
- **104**: Second Blade
- **105**: Thread Dome
- **106**: Pivot Point
- **107**: Fixation Elements
- **108**: First Handle
- **109**: Top Portion
- **110**: Second Handle
- **111**: Back Portion
- **112**: Motor
- **113**: Winding Element
- **114**: Gearbox
- **115**: Bearing
- **116**: Handle Pivot Point
- **117**: Pulling Element
- **118**: Printed Circuit Board Assembly
- **120**: Battery
- **130**: Drive Unit
- **131**: First Sensor
- **132**: Second Sensor
- **133**: Control Unit
- **134**: Spring
- **F1, F2**: Mechanical Force
- **S1, S2**: Outputs
- **N**: Integer

## Claims

1. A cutting tool **(100)** comprising:
a first blade **(102);**
a second blade **(104)** pivotally coupled to the first blade **(102),** wherein the first blade **(102)** and the second blade **(104)** together perform a cutting action on an object placed therebetween;
a first handle **(108)** operatively coupled to the first blade **(102);**
a second handle **(110)** operatively coupled to the second blade **(104),**
a drive unit **(130)** operatively coupled to at least one of the first blade **(102)** and the second blade **(104),** wherein the drive unit (130) is configured to selectively provide a supplemental motor force to assist a movement of at least one of the first blade **(102)** and the second blade **(104)** to perform the cutting action;
at least one first sensor **(131)** coupled to the first handle **(108)** for detecting a force **(F1)** acting on the first handle **(108);**
a control unit **(133)** electrically coupled to the drive unit **(130)** and the at least one first sensor **(131);**
**characterized in that:**
at least one second sensor **(132)** is coupled to the second handle **(110)** for detecting a force **(F2)** acting on the second handle **(110);** and
the control unit **(133)** based on respective output **(S1, S2)** of the at least one first sensor **(131)** and the at least one second sensor **(132)** controls an opening angle between the first blade **(102)** and the second blade **(104).**

2. The cutting tool (100) of claim 1, wherein the at least one first sensor (131) and the at least one second sensor (132) are configured to simultaneously detect mechanical force (F1, F2) exerted respectively on the first handle (108) and the second handle (110) and the material of the object touching the first handle (108) and the second handle (110).

3. The cutting tool (100) of any of the preceding claims, wherein the control unit (133) includes a database.

4. The cutting tool (100) of any of the preceding claims, wherein the control unit (133) includes a machine learning algorithm.

5. The cutting tool (100) of claim 4, wherein the control unit (133) automatically adjusts the opening angle between the first handle (108) and the second handle (110) by virtue of machine learning algorithm to suit the hand size of a user.

6. The cutting tool (100) of any of the preceding claims, wherein the control unit (133) allows automatic locking and unlocking of the cutting tool (100).

7. The cutting tool (100) of claim 6, wherein the control unit (133) allows automatic locking and unlocking when the user taps the at least one handle (108, 110) twice or thrice.

8. The cutting tool (100) of any of the preceding claims, wherein the control unit (133) includes a voice module to adhere to voice commands of the user.

9. The cutting tool (100) of any of the preceding claims, wherein the cutting tool (100) is secateurs.

## Patentansprüche

1. Schneidwerkzeug **(100),** umfassend:
eine erste Klinge **(102);**
eine zweite Klinge **(104),** die an die erste Klinge **(102)** schwenkbar gekoppelt ist, wobei die erste Klinge **(102)** und die zweite Klinge **(104)** zusammen eine Schneidaktion an einem dazwischen platzierten Objekt durchführen;
einen ersten Griff **(108),** der mit der ersten Klinge **(102)** wirkgekoppelt ist;
einen zweiten Griff **(110),** der mit der zweiten Klinge **(104)** wirkgekoppelt ist,
eine Antriebseinheit **(130),** die an mindestens eine der ersten Klinge **(102)** und der zweiten Klinge **(104)** wirkgekoppelt ist, wobei die Antriebseinheit (130) konfiguriert ist, um eine zusätzliche Motorkraft wahlweise bereitzustellen, um eine Bewegung von mindestens einer der ersten Klinge **(102)** und der zweiten Klinge **(104)** zu unterstützen, um die Schneidaktion durchzuführen;
mindestens einen ersten Sensor **(131),** der an den ersten Griff **(108)** zum Erfassen einer Kraft **(F1),** die auf den ersten Griff **(108)** wirkt, gekoppelt ist;
eine Steuereinheit **(133),** die an die Antriebseinheit **(130)** und den mindestens einen ersten Sensor **(131)** elektrisch gekoppelt ist;
**dadurch gekennzeichnet, dass:**
mindestens ein zweiter Sensor **(132)** an den zweiten Griff **(110)** zum Erfassen einer Kraft **(F2),** die auf den zweiten Griff **(110)** wirkt, gekoppelt ist; und
die Steuereinheit **(133)** basierend auf der jeweiligen Ausgabe **(S1, S2)** des mindestens einen ersten Sensors **(131)** und des mindestens einen zweiten Sensors **(132)** einen Öffnungswinkel zwischen der ersten Klinge **(102)** und der zweiten Klinge **(104)** steuert.

2. Schneidwerkzeug (100) nach Anspruch 1, wobei der mindestens eine erste Sensor (131) und der mindestens eine zweite Sensor (132) konfiguriert sind, um gleichzeitig eine mechanische Kraft (F1, F2), die jeweils auf den ersten Griff (108) und den zweiten Griff (110) ausgeübt wird, und das Material des Objekts, das den ersten Griff (108) und den zweiten Griff (110) berührt, zu erfassen.

3. Schneidwerkzeug (100) nach einem der vorstehenden Ansprüche, wobei die Steuereinheit (133) eine Datenbank einschließt.

4. Schneidwerkzeug (100) nach einem der vorstehenden Ansprüche, wobei die Steuereinheit (133) einen maschinellen Lernalgorithmus einschließt.

5. Schneidwerkzeug (100) nach Anspruch 4, wobei die Steuereinheit (133) den Öffnungswinkel zwischen dem ersten Griff (108) und dem zweiten Griff (110) aufgrund maschinellem Lernalgorithmus automatisch anpasst, um zu der Handgröße eines Benutzers zu passen.

6. Schneidwerkzeug (100) nach einem der vorstehenden Ansprüche, wobei die Steuereinheit (133) ein automatisches Verriegeln und Entriegeln des Schneidwerkzeugs (100) ermöglicht.

7. Schneidwerkzeug (100) nach Anspruch 6, wobei die Steuereinheit (133) ein automatisches Verriegeln und Entriegeln ermöglicht, wenn der Benutzer den mindestens einen Griff (108, 110) zweimal oder dreimal antippt.

8. Schneidwerkzeug (100) nach einem der vorstehenden Ansprüche, wobei die Steuereinheit (133) ein Sprachmodul einschließt, um Sprachbefehlen des Benutzers zu folgen.

9. Schneidwerkzeug (100) nach einem der vorstehenden Ansprüche, wobei das Schneidwerkzeug (100) eine Gartenschere ist.

## Revendications

1. Outil de coupe **(100),** comprenant :
une première lame **(102)** ;
une seconde lame **(104)** accouplée de manière pivotante à la première lame **(102),** dans lequel la première lame **(102)** et la seconde lame **(104)** effectuent ensemble une action de coupe sur un objet placé entre elles ;
une première poignée **(108)** accouplée fonctionnellement à la première lame **(102)** ;
une seconde poignée **(110)** accouplée de manière fonctionnelle à la seconde lame **(104),**
une unité d'entraînement **(130)** accouplée de manière fonctionnelle à au moins l'une parmi la première lame **(102)** et la seconde lame **(104),** dans lequel l'unité d'entraînement (130) est conçue pour fournir sélectivement une force de moteur supplémentaire pour aider un mouvement d'au moins l'une parmi la première lame **(102)** et la seconde lame **(104)** pour effectuer l'action de coupe ;
au moins un premier capteur **(131)** accouplé à la première poignée **(108)** permettant de détecter une force **(F1)** agissant sur la première poignée **(108)** ;
une unité de commande **(133)** couplée électriquement à l'unité d'entraînement **(130)** et à l'au moins un premier capteur **(131)** ;
**caractérisé en ce que** :
au moins un second capteur **(132)** est accouplé à la seconde poignée **(110)** pour détecter une force **(F2)** agissant sur la seconde poignée **(110)** ; et
l'unité de commande **(133)** en fonction d'une sortie respective **(S1, S2)** de l'au moins un premier capteur **(131)** et de l'au moins un second capteur **(132)** commande un angle d'ouverture entre la première lame **(102)** et la seconde lame **(104).**

2. Outil de coupe (100) selon la revendication 1, dans lequel l'au moins un premier capteur (131) et l'au moins un second capteur (132) sont configurés pour détecter simultanément une force mécanique (F1, F2) exercée respectivement sur la première poignée (108) et la seconde poignée (110) et le matériau de l'objet touchant la première poignée (108) et la seconde poignée (110).

3. Outil de coupe (100) selon l'une quelconque des revendications précédentes, dans lequel l'unité de commande (133) comporte une base de données.

4. Outil de coupe (100) selon l'une quelconque des revendications précédentes, dans lequel l'unité de commande (133) comporte un algorithme d'apprentissage automatique.

5. Outil de coupe (100) selon la revendication 4, dans lequel l'unité de commande (133) ajuste automatiquement l'angle d'ouverture entre la première poignée (108) et la seconde poignée (110) grâce à un algorithme d'apprentissage automatique pour s'adapter à la taille de main d'un utilisateur.

6. Outil de coupe (100) selon l'une quelconque des revendications précédentes, dans lequel l'unité de commande (133) permet le verrouillage et le déverrouillage automatiques de l'outil de coupe (100).

7. Outil de coupe (100) selon la revendication 6, dans lequel l'unité de commande (133) permet un verrouillage et un déverrouillage automatiques lorsque l'utilisateur appuie deux ou trois fois sur l'au moins une poignée (108, 110).

8. Outil de coupe (100) selon l'une quelconque des revendications précédentes, dans lequel l'unité de commande (133) comporte un module vocal pour adhérer aux commandes vocales de l'utilisateur.

9. Outil de coupe (100) selon l'une quelconque des revendications précédentes, dans lequel l'outil de coupe (100) est un sécateur.
